# FASCICULE DE BREVET EUROPEEN

(11) **EP 2 247 935 B1**
(45) Date de publication et mention de la délivrance du brevet: **31.08.2011**
(21) Numéro de dépôt: 09719579.6
(22) Date de dépôt: 25.02.2009
(51) Int. Cl.: G01N 3/56, F01D 5/28

(54) **PROCEDE POUR TESTER UN REVETEMENT DE PIED D'AUBE**
VERFAHREN ZUM TESTEN DER BESCHICHTUNG EINES SCHAUFELSOCKELS
METHOD FOR TESTING THE COATING OF A VANE BASE

(30) Priorité: 25.02.2008 FR 0851181
(43) Date de publication de la demande: 10.11.2010
(73) Titulaire: Snecma, 75015 Paris (FR)
(72) Inventeur: BASSOT, Alain, F-77590 Bois Le Roi (FR); DUDON, Laurent, F-91170 Viry-chatillon (FR); PERRIAU, Anne-Claire, F-77000 Vaux Le Penil (FR)
(74) Mandataire: Intès, Didier Gérard André
(86) Numéro de dépôt international: PCT/FR2009/050295
(87) Numéro de publication internationale: WO 2009/112756

(56) Documents cités:
- EP-A- 1 598 655
- EP-A- 1 705 261
- US-A- 3 802 255
- US-B1- 6 250 166

## Description

L'invention concerne le domaine du contrôle qualité de revêtements antifrictions pour pieds d'aubes de turbomachine. Plus précisément, l'invention concerne un procédé pour tester un revêtement destiné à revêtir un pied d'aube pour turbomachine.

Les aubes, et en particulier les aubes de soufflante dans les turbomachines aéronautiques (turboréacteurs ou turbopropulseurs) sont des pièces mécaniques extrêmement sollicitées. Pour cette raison, le pied d'aube qui est la partie de maintien de l'aube est une partie de l'aube particulièrement critique. Le pied d'aube comporte des surfaces de contact ou portées qui sont soumises en fonctionnement à des contraintes et des températures élevées. Pour réduire ces contraintes et notamment les contraintes de cisaillement qui sont appliquées sur les portées des pieds d'aube, on utilise de manière connue des revêtements antifrictions. Ces revêtements dits revêtements « antifretting », peuvent être déposés notamment par projection thermique. Ils peuvent être multi-couches. La qualité du revêtement antifrictions est essentielle, car un mode principal de défaillance des aubes est lié au désagrègement (par écaillage, par fissuration, par effritement, ou par usure) du revêtement.

Typiquement, la durée de vie du revêtement d'un pied d'aube est liée au nombre de cycles (dits'cycles moteur') subis par l'aube. Un tel cycle est en fait l'ensemble des sollicitations auxquelles est soumise l'aube pendant une phase de fonctionnement complète de la turbomachine (pendant un vol, dans le cas d'un turboréacteur monté sur un avion), c'est-à-dire du démarrage jusqu'à l'arrêt. Ainsi en particulier pour un avion, un cycle comporte un décollage et un atterrissage.

La durée de vie du revêtement exprimée en nombre de cycles peut être liée à un accord commercial, répondre à un cahier des charges ou être spécifiée par un bureau d'étude. Le revêtement de pied d'aube doit rester fonctionnel pendant toute la durée de vie de l'aube, car habituellement aucune intervention n'est prévue sur le revêtement d'un pied d'aube tout au long de son exploitation.

Pour s'assurer de la qualité de ce revêtement, et de son interface avec le matériau de l'aube lui-même, on procède de manière connue à des examens de revêtement par micrographie, consistant généralement à faire une coupe du revêtement et du pied d'aube et à examiner au microscope l'aspect de cette coupe. Un tel test permet de vérifier la structure interne et l'épaisseur du revêtement, et dans une certaine mesure la qualité de son interface avec le matériau du pied d'aube proprement dit. Il est également connu de tester la qualité de ce revêtement par des tests standards de dureté ou encore par des tests d'adhérence en traction ou en cisaillement.

Il est toutefois apparu que ces différents tests s'avèrent insuffisants pour distinguer des revêtements de qualité supérieure par rapport à des revêtements de qualité simplement convenable, et se faire une idée précise de la durée de vie et de la tenue mécanique en service du revêtement déposé sur le pied d'aube : En d'autres termes, les tests actuels ne permettent pas de distinguer qualitativement les différents revêtements dès lors qu'ils résistent de manière satisfaisante à un certain nombre de cycles.

D'autres procédés de test sont par ailleurs divulgués par les documents EP 1705261, US 6250166, US 3802255 et EP 1598655.

Le but de l'invention est de proposer un procédé pour tester un revêtement pour pied d'aube, qui s'avère plus discriminant que les tests précédents quant à la qualité des revêtements, et permette d'obtenir des résultats fortement corrélés avec les constats réels de tenue dans le temps des revêtements de pieds d'aubes, tels qu'obtenus sur l'ensemble de la vie d'une aube soit couramment de 10000 à 15000 cycles.

Ce but est atteint grâce à un procédé comprenant les étapes suivantes :
- on fournit une éprouvette dite de disque comportant au moins une portée, et une autre éprouvette dite d'aube comportant au moins une portée revêtue dudit revêtement à tester, l'éprouvette d'aube se composant de deux demi-éprouvettes aptes à être engagées de part et d'autre de l'éprouvette de disque,
- on soumet l'éprouvette d'aube engagée avec l'éprouvette de disque à des cycles de traction au cours desquels les éprouvettes sont sollicitées en traction l'une par rapport à l'autre suivant une direction de traction, l'effort de traction se transmettant via les portées en contact de l'éprouvette d'aube et de l'éprouvette de disque ;
- on évalue ledit revêtement en fonction d'un critère d'évaluation prédéterminé.

Le principe du test ainsi défini est fondamentalement différent des tests précédemment connus. En effet, au lieu de se fonder sur l'examen de pieds d'aube neufs, il consiste à soumettre des pieds d'aube et plus précisément les portées de ceux-ci, à des tests de fatigue représentatifs des sollicitations auxquelles ils sont exposés pendant la vie de l'aube. Avantageusement, le procédé ne nécessite pas l'utilisation d'aubes mais simplement l'utilisation de deux éprouvettes, dont en particulier l'éprouvette d'aube présentant une portée couverte du revêtement à tester. On notera qu'il est parfaitement possible en outre que l'éprouvette d'aube présente non seulement une, mais plusieurs portées, l'éprouvette de disque comportant alors une portée pour chacune des portées de l'éprouvette d'aube.

L'objectif du test du revêtement d'aube peut être par exemple, de tester de manière générale un nouveau revêtement, ou encore, de valider effectivement la qualité du revêtement appliqué sur une série d'aubes devant être mises en exploitation. Selon l'objectif poursuivi, les éprouvettes utilisées et les conditions de test (nombre de cycles, force maximale appliquée pendant ceux-ci) peuvent être plus ou moins représentatifs des sollicitations réelles auxquelles est soumis le revêtement pendant l'exploitation du pied d'aube. Ainsi typiquement, le nombre de cycles de traction et la force de traction maximale appliquée aux éprouvettes sont déterminés pour un revêtement donné en fonction de la pression maximale admissible sur les portées du pied d'aube et du nombre de cycles moteurs prévus pendant la durée de vie de l'aube.

Par ailleurs, au cours des cycles de traction, les déplacements se produisent en fonction des efforts transmis. Un cycle de traction est caractérisé par la courbe de variation de la force de traction en fonction du temps. En pratique, on fait croître la force de traction depuis une valeur initiale nulle, ou du moins faible (par rapport à la valeur maximale) jusqu'à une valeur maximale, puis l'on revient à la valeur initiale. La valeur initiale et la valeur maximale peuvent éventuellement, l'une et/ou l'autre indépendamment, être maintenues pendant une certaine durée. Par ailleurs d'autres profils de cycles de traction sont envisageables, selon la manière dont on veut simuler les différentes phases de fonctionnement de la turbomachine. Le paramètre de vitesse de montée en charge, c'est-à-dire l'augmentation de la force de traction par unité de temps, peut aussi être ajusté.

Typiquement, l'éprouvette d'aube est soumise à de 3 000 à 15 000 cycles de traction, avec des forces de traction pouvant varier entre 15 000 et 30 000 daN.

L'évaluation des éprouvettes peut être faite soit pendant les cycles de traction (en utilisant par exemple des capteurs montés sur la machine de test comme des caméras et/ou des capteurs à ultra-sons), soit à l'issue des cycles de traction, une fois les éprouvettes démontées.

Selon un mode de réalisation, lors de l'étape d'évaluation du procédé on examine l'éprouvette d'aube de manière à déterminer si elle présente un écaillage ou un effritement sur sa ou ses portées.

L'avantage du procédé selon l'invention est qu'il fournit des résultats très représentatifs du comportement et du vieillissement des revêtements des pieds d'aubes réels.

De manière connue, la fixation d'une aube sur un disque rotor est faite en général par un accouplement tenon/mortaise formant une attache. Cette attache est constituée par un tenon aménagé sur une extrémité radialement intérieure de l'aube, qui est fixé dans une mortaise prévue sur la périphérie du disque rotor. Les pieds d'aubes d'une part, les protubérances ou tenons de disque rotor formées entre les mortaises de disque rotor d'autre part, ont ainsi respectivement des formes complémentaires en queue d'aronde, disposées radialement en sens opposé, de manière à assurer la fixation mutuelle entre les aubes et le disque rotor.

Dans une roue à aubes, les aubes sont régulièrement attachées sur la périphérie extérieure du disque rotor, qui comporte ainsi autant d'alvéoles de fixation qu'il y a d'aubes à fixer.

Les attaches des aubes sur le disque rotor forment un motif qui se répète dans le sens circonférentiel et qui peut être défini par exemple par le pied d'aube et la mortaise correspondante du disque rotor, ou encore par le tenon en queue d'aronde (ou queue d'aronde) du disque rotor et les deux demi-pieds d'aubes qui enserrent celui-ci dans la roue à aubes.

On comprend donc que le principe du procédé selon l'invention consiste précisément à reproduire les sollicitations cycliques subies par le motif, à savoir les sollicitations du tenon en queue d'aronde du disque rotor retenu par deux demi-pieds d'aubes.

L'éprouvette d'aube se compose de deux demi-éprouvettes aptes à être engagées de part et d'autre de l'éprouvette de disque, ou contre-éprouvette, reproduisant un motif unitaire. La disposition symétrique des demi-éprouvettes autour de la contre-éprouvette permet que les efforts latéraux exercés sur celle-ci pendant les cycles de traction soient symétriques de sens opposé et donc s'annulent. De la sorte, avantageusement le procédé ne nécessite pas des moyens mécaniques aptes à supporter des efforts latéraux que subirait la contre-éprouvette pendant les cycles de traction. En outre, dans le cas où le pied d'aube présente des portées sur ses deux faces qui ne sont pas symétriques, cette disposition avec deux demi-éprouvettes enserrant une contre-éprouvette permet que les éprouvettes présentent des portées représentatives des deux faces de contact du pied d'aube. Comme ces portées sont testées au cours du même test, celui-ci permet de tester et vérifier en même temps le comportement du revêtement pour les deux faces du pied d'aube.

En outre, le procédé permet d'obtenir des résultats très représentatifs de la réalité. En effet, la disposition des éprouvettes correspond à leurs positions respectives dans une turbomachine : Les deux demi-éprouvettes représentatives des deux moitiés d'un pied d'aube enserrent de part et d'autre et retiennent une contre-éprouvette représentative d'un tenon du disque rotor. Il a été constaté que dans cette disposition, une excellente représentativité des résultats est obtenue.

Selon un mode de réalisation la ou les portées de l'éprouvette d'aube et de l'éprouvette de disque ont des formes complémentaires et s'étendent dans une direction oblique par rapport à la direction de traction, de telle sorte que le contact entre ces portées est représentatif de celui d'un pied d'aube avec un tenon de disque rotor de turbomachine. La forme oblique des portées convertit les efforts de traction radiaux en des efforts dans la direction transversale ou circonférentielle.

Avantageusement, les portées de l'éprouvette d'aube et/ou de l'éprouvette de disque forment un angle d'environ 45° par rapport à la direction de traction. Plus généralement, cet angle peut varier entre 30 et 60°.

Selon un mode de réalisation, l'éprouvette d'aube a au voisinage de sa ou ses portées une forme représentative d'un pied d'aube de turbomachine, l'axe de traction étant l'axe radial dudit pied d'aube. Cette forme pour l'éprouvette d'aube permet de tester le revêtement dans les conditions les plus représentatives de ses conditions d'exploitation. Notamment, l'éprouvette d'aube peut présenter un comportement et des déformations mécaniques représentatifs de ceux d'un pied d'aube ou du pied d'aube pour lequel est prévu le revêtement.

Selon un mode de réalisation, l'éprouvette de disque a au voisinage de sa ou ses portées une forme représentative d'un tenon de disque rotor de turbomachine. Cette forme concerne la partie de l'éprouvette avec qui est située du côté de l'éprouvette d'aube.

Les portées respectives des éprouvettes sont ainsi représentatives respectivement des portées du pied d'aube et du tenon correspondant du disque de rotor.

Par ailleurs, pour permettre une représentation fidèle du comportement de l'attache, c'est-à-dire du pied d'aube par rapport aux tenons du disque rotor, on fabrique habituellement l'éprouvette d'aube dans le même matériau que le pied d'aube; c'est-à-dire typiquement en alliage à base de titane pour le compresseur basse pression et haute pression, en alliage à base de nickel pour les parties de moteur dont la température de fonctionnement dépasse 500°C. Pour les mêmes raisons, on peut également choisir un matériau identique à celui du disque rotor pour l'éprouvette de disque, à savoir également en alliage à base de titane ou de nickel.

Les tests sont réalisés de préférence à l'aide d'une machine de test de traction. Cette machine comporte sur un bâti de premiers et de seconds moyens de maintien qui maintiennent respectivement une première et une seconde des éprouvettes. Ces moyens de maintien permettent de maintenir tout au long du test les éprouvettes dans la position requise, qui est la position engagée des deux éprouvettes dans laquelle leurs portées respectives coïncident et sont en contact. Cette position reproduit de préférence les positions respectives du pied d'aube et du disque rotor en fonctionnement.

La machine comporte en outre des moyens de traction qui imposent des déplacements alternatifs d'un système de maintien par rapport à l'autre, dans une direction de traction. Les systèmes de maintien sont alors soumis à des mouvements de traction relatifs l'un par rapport à l'autre, de manière à soumettre les portées et notamment les portées de l'éprouvette d'aube à des sollicitations représentatives de celles qu'éprouve le pied d'aube en fonctionnement. Les déplacements suivant la direction de traction sont habituellement mesurés et enregistrés par un système de mesure de déplacement comme un comparateur.

A l'issue des cycles de traction, le revêtement des portées de l'éprouvette d'aube est évalué. Cette évaluation peut se faire notamment par un examen visuel (i.e. macrographique) ou micrographique ; des examens complémentaires, comme des tests d'adhérence, de tenue au choc ou autre étant également possibles à ce stade. Pour cet examen, un critère d'évaluation pour le revêtement de pied d'aube doit être défini, en fonction duquel est prise la décision d'acceptation ou de rejet du revêtement. Le critère consiste généralement en l'absence de désagrègement par écaillage ou d'effritement du revêtement, sur toute la (ou les) portée(s) de l'aube. On utilise par exemple un référentiel visuel montrant les écailles maximales admises (en nombre, dimension). Le respect d'une taille maximale pour les écailles peut être vérifié également par des mesures géométriques.

On notera enfin que de préférence, le procédé de test n'est pas mis en oeuvre une seule fois, pour un revêtement donné ; au contraire, généralement le test d'évaluation du revêtement est constitué d'une série d'essais (trois par exemple), ceci afin d'augmenter la fiabilité des résultats : Les résultats peuvent ainsi être calculés à l'aide de méthodes statistiques, ce qui permet de réduire leur dispersion.

Dans ce cas, le procédé pour tester le revêtement de pied d'aube comprend les étapes suivantes :
- on réalise le test défini précédemment sur un ou plusieurs couples d'éprouvettes, chaque couple d'éprouvettes comprenant une éprouvette d'aube dont la ou les portées sont revêtues du revêtement à tester, et une éprouvette de disque ; et
- on exploite les résultats obtenus à l'aide de méthodes statistiques, de manière à qualifier la qualité du revêtement d'aube.

Le critère d'évaluation des aubes peut par exemple être le suivant : les aubes sont qualifiées et acceptées, si aucune d'elles ne présente un écaillage après 13 500 cycles avec une force maximale de traction de 20 000 daN. Il est aussi possible d'accepter un pourcentage de défauts donné.

Par ailleurs, l'efficacité des tests réalisés peut être encore accrue par l'observation de l'évolution de l'écaillage de l'éprouvette d'aube pendant les cycles de traction (et non à l'issue de ceux-ci). On parvient ainsi à détecter plus tôt les revêtements non satisfaisants.

Reprenant ce principe, selon une variante du procédé de l'invention, l'évaluation des éprouvettes est faite pendant les cycles de traction, et le nombre de ces cycles n'est pas fixé à l'avance. Dans ce cas, les cycles sont arrêtés dès lors qu'un critère d'arrêt a été atteint, comme par exemple, la présence d'écaillage dans le revêtement des portées de l'éprouvette d'aube.

Selon un autre mode de réalisation de l'invention, le procédé comporte en outre l'étape suivante : on fixe à l'avance les paramètres des cycles de traction. L'évaluation du revêtement est alors faite après un nombre prédéterminé de ces cycles de traction. Suivant le procédé on fixe donc au début les paramètres des cycles de traction et l'on choisit un critère d'évaluation; on soumet les éprouvettes aux cycles de traction ainsi prévus ; et à l'issue des cycles, en général après avoir démonté les éprouvettes, on évalue celles-ci au regard du critère d'évaluation.

Les paramètres des cycles de traction sont habituellement le nombre de cycles, la force maximale exercée pendant le cycle, ou encore la vitesse d'augmentation ou de diminution de la force de traction en fonction du temps, la température, ou autre. Ils sont fixés avant le début du test, de même que le nombre de cycles, en fonction du revêtement et de l'aube à évaluer, et des modes de fonctionnement de la turbomachine que l'on souhaite simuler.

On notera en particulier que pour tester la qualité d'un revêtement de pied d'aube en utilisant le procédé selon l'invention, on peut choisir d'augmenter le nombre de cycles en réduisant la force de traction maximale pendant le cycle, ou inversement. En effet, il a été constaté pour les revêtements de pied d'aube, que tant que les paramètres restent dans une plage de valeurs plausibles pour le pied d'aube (On exclut par exemple une pression qui dépasserait la résistance mécanique du matériau du pied d'aube lui-même), il est sensiblement équivalent pour tester la qualité du revêtement sur un lot d'éprouvettes d'aube de réaliser un nombre de cycles réduit, avec une force de traction élevée, ou un plus grand nombre de cycles, avec une moindre force de traction. Par exemple, de manière sensiblement équivalente, on peut tester un revêtement revêtant des éprouvettes en soumettant celles-ci soit à 15000 cycles de traction avec une force maximale de 15000 daN, soit à 6000 cycles de traction avec une force maximale de 19 000 daN.

Selon un mode de réalisation, pendant les cycles de traction, on limite par des moyens de rappel élastique l'écartement latéral des éprouvettes se produisant en réponse à la force d'écartement exercée par les éprouvettes l'une sur l'autre sous l'effet de la traction. L'écartement latéral (dans la direction perpendiculaire à la direction de traction) des deux éprouvettes reproduit le fait que dans la turbomachine pendant le fonctionnement les tenons de disque rotor et les pieds d'aubes se déforment, et cela notamment dans le cas où les éprouvettes comportent des portées disposées dans une direction oblique par rapport à la direction de traction. Grâce à cette possibilité d'écartement latéral limité des éprouvettes, grâce à des moyens de rappel élastique, la représentativité des résultats obtenus grâce au procédé est augmentée.

Selon un perfectionnement du mode de réalisation précédent, dans le but de suivre le comportement des éprouvettes au cours des cycles de traction, pendant les cycles de traction on mesure l'écartement latéral des éprouvettes. Ce paramètre permet de s'assurer que les positions relatives l'une par rapport à l'autre des éprouvettes restent bien représentatives des positions dans lesquelles on veut tester le revêtement.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- les figures 1 et 2 sont des vues partielles en coupe, respectivement de face et de côté, d'éprouvettes utilisées pour la mise en oeuvre du procédé selon l'invention, représentées dans une machine de test ;
- la figure 3 est une vue partielle en coupe axiale de ces éprouvettes dans la zone de leurs portées ; et
- la figure 4 est une vue en coupe axiale d'une machine de test permettant la mise en oeuvre du procédé selon l'invention.

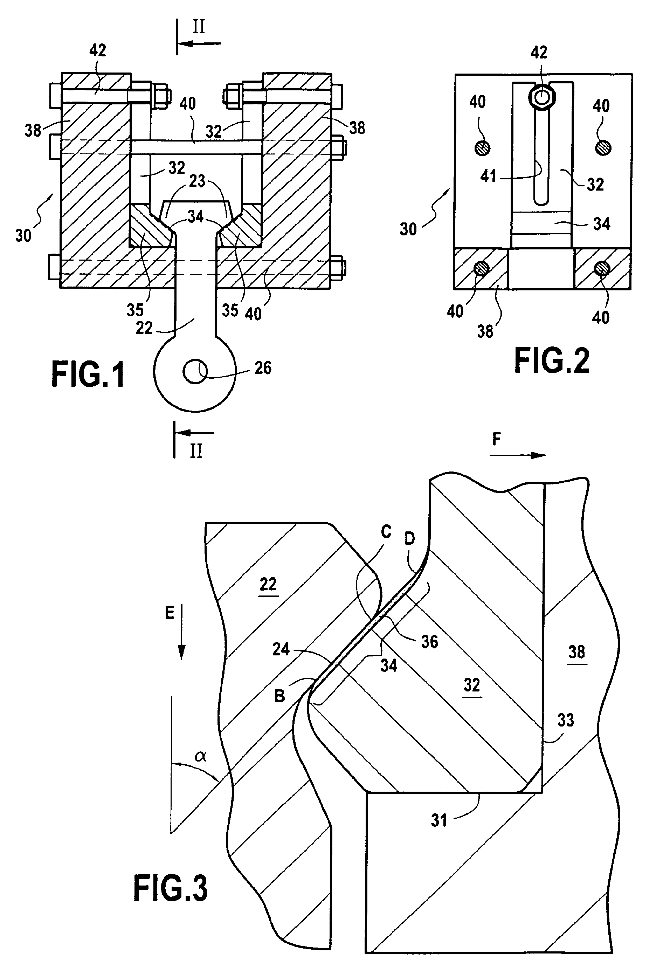

Les figures 1 et 2 sont des vues partielles en coupe d'éprouvettes 22, 32 utilisées pour la mise en oeuvre du procédé selon l'invention, présentées montées dans une machine de test.

Selon le procédé, pour tester un revêtement de pied d'aube, une première étape consiste à fabriquer des éprouvettes, qui seront utilisées et consommées au cours du test. Ces éprouvettes sont fabriquées par paire, chaque paire comportant une éprouvette dite d'aube 32, et une éprouvette dite de disque 22.

L'éprouvette de disque 22 est aussi appelée contre-éprouvette. A une extrémité (son extrémité supérieure sur la figure 1), elle présente un bulbe relativement symétrique dont les côtés 23 débordent en porte-à-faux de part et d'autre de son axe. A son autre extrémité, elle présente en outre des moyens de fixation, permettant sa fixation sur la machine de test à l'aide de premiers moyens de maintien servant à retenir l'éprouvette de disque pendant les tests de traction. Ces moyens sont ici un perçage, prévu pour faire passer un axe de fixation 26 de la machine de test.

L'éprouvette d'aube pour sa part est composée de deux demi-éprouvettes 32, positionnées autour de l'éprouvette de disque 22. Les demi-éprouvettes 32 comportent des surfaces de contact, ou portées, qui font face et sont en contact en position de test avec des portées correspondantes de l'éprouvette 22. Les portées 34 des demi-éprouvettes 32 se trouvent sur les faces supérieures inclinées de renflements 35 formés sur la base des demi-éprouvettes 32. Les portées 34 des demi-éprouvettes 32 sont des surfaces de contact qui sont assimilables aux portées d'un pied d'aube, les portées de l'éprouvette étant quant à elles assimilables aux portées du tenon en queue d'aronde du disque rotor.

Dans la machine de test permettant la mise en oeuvre du procédé selon l'invention, comme le montrent les figures 1 et 2, les demi-éprouvettes 32 sont maintenues par un système de maintien 30. Le rôle de celui-ci est de maintenir les deux demi-éprouvettes 32 et plus précisément de maintenir les portées 34 de celles-ci en face des portées correspondantes de la contre-éprouvette 22, durant toute la durée du test. Le système de maintien 30 comporte des montants 38 parallèles, et des moyens de rappel élastique 40 des montants 38 l'un par rapport à l'autre. Ces moyens de rappel élastique sont dans l'exemple quatre vis 40, qui maintiennent fermement en position les demi-éprouvettes autour de la contre-éprouvette 22. Les demi-éprouvettes 32 sont fixées sur les montants 38 par des vis 42, passant à travers des trous oblongs 41 aménagés dans les demi-éprouvettes, dans des parties de celles-ci distantes de leurs renflements 35.

On notera en outre que le procédé peut être également mis en oeuvre avec deux montants 38 fixés rigidement l'un à l'autre ou même ne formant qu'une pièce unique, mais avantageusement les montants 38 constituent des parties indépendantes au sein du système de maintien 30.

La figure 3 fait apparaître plus en détail les formes en contact de l'éprouvette 22 et d'une demi-éprouvette 32. La demi-éprouvette 32 est représentée en appui sur le montant 38, par ses faces inférieure 31 et arrière 33. La demi-éprouvette 32 comporte une portée 34 qui s'étend entre un point B et un point D. Sur cette portée 34, la demi-éprouvette 32 est revêtue du revêtement 36 à tester. Ce revêtement est de même nature et appliqué suivant la même méthode que le revêtement utilisé pour protéger les portées des pieds d'aubes. Ce revêtement dépasse de part et d'autre de la zone de contact 24 qui est une partie de la portée 34. En fait, dans la position relative représentée de la demi-éprouvette 32 et de la contre-éprouvette 22, la zone de contact 24 ne s'étend que sur une partie de la portée 34, entre les points B et C. Au cours du test de traction, la position de la zone de contact peut varier par rapport à la portée 34.

Comme on le voit sur la figure 3, les portées de l'éprouvette 22 et de la demi-éprouvette 32 sont disposées dans une direction oblique ou inclinée par rapport à la direction E, qui est la direction de traction. Cette inclinaison est celle que l'on retrouve au niveau de la fixation du pied d'aube sur le disque de rotor. L'angle d'inclinaison α est voisin de 45°.

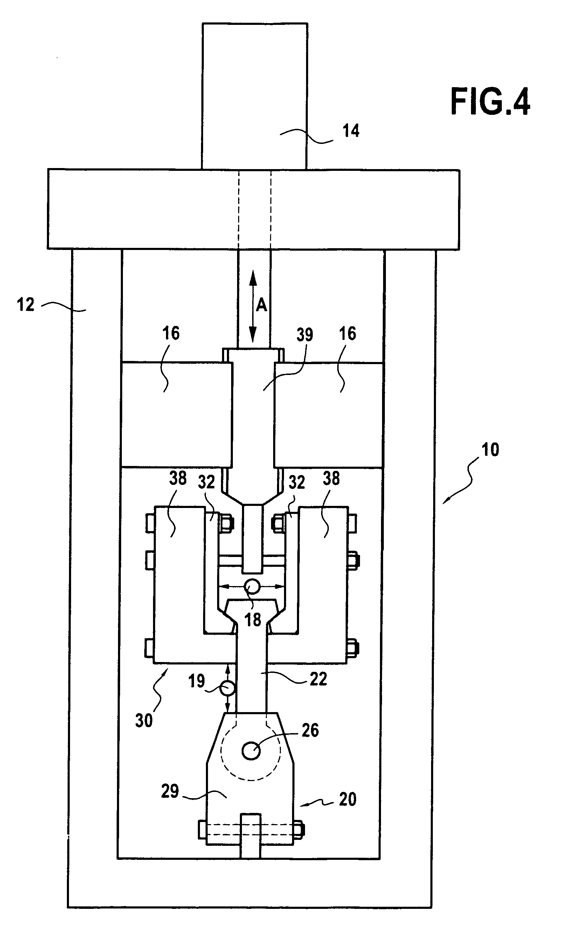

La deuxième étape du procédé consiste à soumettre les éprouvettes à des cycles de traction. Cette opération est réalisée sur une machine de test comme celle précédemment évoquée, représentée sur la figure 4.

Cette machine 10 comporte une structure porteuse 12 généralement constituée par un bâti mécano-soudé. Cette structure porteuse 12 supporte deux systèmes de maintien 20 et 30.

Le premier système de maintien 20 situé dans la partie basse de la machine comporte une colonne fixe 29 qui maintient en position la contre-éprouvette 22. La contre-éprouvette 22 comporte un perçage dans lequel passe un axe 26 du premier système de maintien, axe grâce auquel la contre-éprouvette 22 est maintenue quelles que soient les sollicitations en traction qu'elle reçoit.

Le deuxième système de maintien 30 sert à maintenir en position les deux demi-éprouvettes 32. Ce système de maintien 30 comporte une poutre mobile 39 mise en mouvement alternatif de translation rectiligne dans la direction verticale suivant la double flèche A par un actuateur linéaire 14 ou tout autre moyen d'actuation équivalent. Cette poutre 39 est guidée dans son mouvement vertical alternatif de translation par les glissières 16. Le système de maintien 30 comporte en outre des moyens pour lier rigidement les demi-éprouvettes 32 par rapport à la poutre 39, qui comportent notamment les montants 38 cités précédemment.

Les caractéristiques de l'actuateur linéaire 14 sont choisies de telle sorte que celui-ci puisse imprimer au deuxième système de maintien 30 par rapport au premier 20 des mouvements verticaux de translation qui sont représentatifs de ceux qu'effectue une aube et plus précisément le pied de l'aube par rapport au disque de rotor pendant le fonctionnement de la turbomachine à laquelle l'aube appartient. Ces mouvements sont dus aux forces centrifuges considérables reçues par les aubes lors de la rotation du rotor - Ces forces centrifuges peuvent être assimilées à une traction radiale sur l'aube -.

Le principe des cycles de traction, est de soumettre les éprouvettes à des cycles de sollicitations dans une direction dite direction de traction, les éprouvettes étant disposées de telle sorte que les efforts de traction soient transmis via leurs portées en regard, comme cela apparaît sur les différentes figures. Les portées respectives des demi-éprouvettes et de la contre-éprouvette sont ainsi forcées et pressées au contact l'une de l'autre, ce qui permet de tester, de mettre à l'épreuve le revêtement de l'éprouvette d'aube (ici, les deux demi-éprouvettes). Dans la machine de la figure 4, les sollicitations sont appliquées aux demi-éprouvettes 32, l'éprouvette 22 (i.e. la contre-éprouvette) étant fixe. La configuration inverse est tout-à-fait possible.

Dans la machine 10, lorsque l'éprouvette 22 est sollicitée en traction (flèche E), sa portée entre en contact avec la portée 34 de la demi-éprouvette. A cause de l'angle d'inclinaison α, sous l'effet du contact, la force axiale dans la direction de traction E appliquée à l'éprouvette 22, est convertie en une force transversale dans le sens de la flèche F, appliquée à la demi-éprouvette 32. Pour résister à ces forces d'écartement, les montants 38 sont reliés par les vis 40 qui les empêchent de s'écarter. Ces vis possèdent une légère élasticité, calculée, qui leur permet de s'allonger légèrement en réponse à ces forces, et ainsi de reproduire la déformation du pied d'aube et des tenons de disque de rotor sous l'effet de la rotation du rotor.

Cette possibilité de déplacement latéral des deux montants 38, dans la direction circonférentielle par rapport au pied d'aube (c'est-à-dire perpendiculairement à la direction de traction et aux portées du pied d'aube) permet de mieux reproduire les conditions de maintien de l'aube en fonctionnement.

Pour contrôler le bon fonctionnement des cycles de traction auxquels sont soumis les pieds d'aube, la machine comporte en outre des moyens de mesure des mouvements des éprouvettes pendant l'essai. Cette mesure permet de s'assurer du bon fonctionnement et du bon positionnement des différentes pièces au cours de l'essai. Elle peut comprendre un premier système de mesure 19 des déplacements suivant l'axe de traction, et un second système de mesure 18 de l'écartement latéral des demi-éprouvettes 32.

A titre d'exemple, une procédure concrète pour tester un revêtement de pied d'aube suivant le procédé de l'invention, en utilisant la machine de la figure 4, va maintenant être détaillée.

Il faut noter tout d'abord que pour tester un couple d'éprouvettes, on procède de la manière suivante :
- on prépare un couple d'éprouvettes constitué par deux demi-éprouvettes d'aube et une éprouvette de disque ;
- on soumet ce couple d'éprouvettes à 10 000 cycles de traction, la force de traction variant suivant un même profil en fonction du temps pendant chacun des cycles de traction; et
- on examine alors l'état des portées des demi-éprouvettes d'aube, de manière à déterminer si cet état est acceptable ou non. Le résultat du test est jugé satisfaisant pour le couple d'éprouvettes s'il n'y a pas d'écaillage et/ou d'usure jusqu'au matériau de l'éprouvette elle-même sur les portées des demi-éprouvettes d'aube.

Le nombre de cycles de traction (10000) et le profil de variation de la force de traction en fonction du temps pendant les cycles de traction sont déterminés à l'avance en fonction de l'aube à laquelle le revêtement est destiné.

Cette méthode pour tester un couple d'éprouvettes étant défini, il est maintenant possible de préciser la manière dont on qualifie le revêtement d'aube :

Pour qualifier le revêtement d'aube, on teste selon la méthode précédente trois couples d'éprouvettes. Le revêtement est qualifié si l'on obtient des résultats satisfaisants sont obtenus pour au moins deux couples d'éprouvettes sur trois.

## Revendications

1. Procédé pour tester un revêtement (36) pour pied d'aube comprenant les étapes suivantes :
- on fournit une éprouvette dite de disque (22) comportant au moins une portée, et une autre éprouvette dite d'aube (32) comportant au moins une portée (34) revêtue dudit revêtement, l'éprouvette d'aube se composant de deux demi-éprouvettes (32) aptes à être engagées de part et d'autre de l'éprouvette de disque,
- on soumet l'éprouvette d'aube (32) engagée avec l'éprouvette de disque (22) à des cycles de traction au cours desquels les éprouvettes sont sollicitées en traction l'une par rapport à l'autre suivant une direction de traction (A), l'effort de traction se transmettant via les portées en contact de l'éprouvette d'aube et de l'éprouvette de disque ;
- on évalue ledit revêtement en fonction d'un critère d'évaluation prédéterminé.

2. Procédé suivant la revendication 1, **caractérisé en ce que** les portées de l'éprouvette d'aube et de l'éprouvette de disque ont des formes complémentaires et s'étendent dans une direction oblique par rapport à la direction de traction (A).

3. Procédé suivant la revendication 1 ou 2, **caractérisé en ce que** pendant les cycles de traction, on limite par des moyens de rappel élastique (40) l'écartement latéral des éprouvettes se produisant en réponse à la force d'écartement exercée par les éprouvettes l'une sur l'autre sous l'effet de la traction.

4. Procédé suivant la revendication 3, **caractérisé en ce que** pendant les cycles de traction, on mesure ledit écartement latéral.

5. Procédé suivant l'une quelconque des revendications 1 à 4, **caractérisé en ce que** l'éprouvette d'aube (32) a au voisinage de sa ou ses portées une forme représentative d'un pied d'aube de turbomachine, l'axe de traction étant l'axe radial dudit pied d'aube.

6. Procédé suivant l'une quelconque des revendications 1 à 5, **caractérisé en ce que** l'éprouvette de disque (22) a au voisinage de sa ou ses portées une forme représentative d'un tenon de disque rotor de turbomachine.

7. Procédé suivant l'une quelconque des revendications 1 à 6, **caractérisé en ce qu'**il comporte en outre l'étape suivante : on fixe à l'avance les paramètres des cycles de traction ; l'évaluation du revêtement étant faite après un nombre prédéterminé de cycles de traction.

8. Procédé suivant l'une quelconque des revendications 1 à 7, **caractérisé en ce que** l'évaluation comporte un examen visuel ou micrographique.

## Claims

1. A method for testing a coating (36) for blade roots, comprising the following steps:
- providing a so-called disk test piece (22) comprising at least one bearing surface, and another so-called blade test piece (32) comprising at least one bearing surface coated with said coating, the blade test piece being composed of two test piece halves (32) adapted to be engaged on either side of the disk test piece,
- subjecting the blade test piece (32) engaged with the disk test piece (22) to tensile cycles during which the test pieces undergo tensile stress with respect to each other in a tensile direction (A), the tensile strain being transmitted via the bearing surfaces contacting the blade test piece and the disk test piece;
- evaluating said coating depending on a predetermined evaluation criterion.

2. The method according to claim 1, **characterized in that** the bearing surfaces of the blade test piece and the disk test piece have complementary shapes and extend in a slanted direction with respect to the tensile direction (A).

3. The method according to claim 1 or 2, **characterized in that** during the tensile cycles, through resilient return means (40), lateral opening of the test pieces is limited, which occurs in response to the opening force applied by the test pieces to each other under the effect of tension.

4. The method according to claim 3, **characterized in that** during the tensile cycles, said lateral opening is measured.

5. The method according to any of claims 1 to 4, **characterized in that** close to the bearing surface(s) thereof, the blade test piece (32) has a shape representing a turbomachine blade root, with the tensile axis being the radial axis of said blade root.

6. The method according to any of claims 1 to 5, **characterized in that** close to the bearing surface(s) thereof, the disk test piece (22) has a shape representing a turbomachine rotor disk tenon.

7. The method according to any of claims 1 to 6, **characterized in** further comprising the following step: fixing in advance the parameters of the tensile cycles; the evaluation of the coating being performed after a predetermined number of tensile cycles.

8. The method according to any of claims 1 to 7, **characterized in that** the evaluation comprises a visual or micrographic inspection.

## Patentansprüche

1. Verfahren zum Prüfen einer Beschichtung (36) für einen Schaufelfuß, welches die folgenden Schritte umfaßt:
- es werden ein sogenannter Scheibenprüfkörper (22), der wenigstens eine Auflagefläche aufweist, sowie ein weiterer sogenannter Schaufelprüfkörper (32), der wenigstens eine mit der Beschichtung überzogene Auflagefläche (34) aufweist, bereitgestellt, wobei der Schaufelprüfkörper aus zwei halben Prüfkörpern (32) besteht, die geeignet sind, auf beiden Seiten des Scheibenprüfkörpers aufgesteckt zu werden,
- der mit dem Scheibenprüfkörper (22) in Eingriff befindliche Schaufelprüfkörper (32) wird Zugzyklen unterzogen, im Laufe derer die Prüfkörper entlang einer Zugrichtung (A) zueinander auf Zug beansprucht werden, wobei die Zugkraft sich über die in Kontakt befindlichen Auflageflächen des Schaufelprüfkörpers und des Scheibenprüfkörpers überträgt,
- die Beschichtung wird in Abhängigkeit eines vorbestimmten Bewertungskriteriums bewertet.

2. Verfahren nach Anspruch 1, **dadurch gekennzeichnet, daß** die Auflageflächen des Schaufelprüfkörpers und des Scheibenprüfkörpers ergänzende Formen haben und sich in einer zur Zugrichtung (A) schräg verlaufenden Richtung erstrecken.

3. Verfahren nach Anspruch 1 oder 2, **dadurch gekennzeichnet, daß** während der Zugzyklen der Seitenabstand der Prüfkörper, der sich als Reaktion auf die durch die Prüfkörper unter der Wirkung des Zuges aufeinander ausgeübte Spreizkraft einstellt, durch elastische Rückstellmittel (40) begrenzt wird.

4. Verfahren nach Anspruch 3, **dadurch gekennzeichnet, daß** während der Zugzyklen der Seitenabstand gemessen wird.

5. Verfahren nach einem der Ansprüche 1 bis 4, **dadurch gekennzeichnet, daß** der Schaufelprüfkörper (32) in der Nähe seiner Auflagefläche oder Auflageflächen eine einen Schaufelfuß einer Turbomaschine darstellende Form aufweist, wobei die Zugachse die radiale Achse des Schaufelfußes ist.

6. Verfahren nach einem der Ansprüche 1 bis 5, **dadurch gekennzeichnet, daß** der Scheibenprüfkörper (22) in der Nähe seiner Auflagefläche oder Auflageflächen eine einen Zapfen einer Rotorscheibe einer Turbomaschine darstellende Form aufweist.

7. Verfahren nach einem der Ansprüche 1 bis 6, **dadurch gekennzeichnet, daß** es ferner folgenden Schritt umfaßt:
die Parameter der Zugzyklen werden im Voraus festgelegt, wobei die Bewertung der Beschichtung nach einer vorbestimmten Anzahl von Zugzyklen erfolgt.

8. Verfahren nach einem der Ansprüche 1 bis 7, **dadurch gekennzeichnet, daß** die Bewertung eine Sichtprüfung oder mikrographische Prüfung umfaßt.
